# EUROPÄISCHE PATENTSCHRIFT

(11) **EP 2 059 327 B1**
(45) Veröffentlichungstag und Bekanntmachung des Hinweises auf die Patenterteilung: **15.10.2014**
(21) Anmeldenummer: 07802906.3
(22) Anmeldetag: 27.08.2007
(51) Int. Cl.: B01D 53/14

(54) **ENTFERNUNG VON KOHLENDIOXID AUS VERBRENNUNGSABGASEN**
REMOVAL OF CARBON DIOXIDE FROM COMBUSTION EXHAUST GASES
ÉLIMINATION DU DIOXYDE DE CARBONE DANS LES GAZ SORTANTS DE COMBUSTION

(30) Priorität: 28.08.2006 EP 06119660
(43) Veröffentlichungstag der Anmeldung: 20.05.2009
(73) Patentinhaber: BASF SE, 67056 Ludwigshafen (DE)
(72) Erfinder: WAGNER, Rupert, 67551 Worms (DE); LICHTFERS, Ute, 76187 Karlsruhe (DE); SCHUDA, Volker, 76829 Landau (DE)
(86) Internationale Anmeldenummer: PCT/EP2007/058866
(87) Internationale Veröffentlichungsnummer: WO 2008/025743

(56) Entgegenhaltungen:
- EP-A- 0 125 358
- DE-A1- 2 525 779
- US-A- 4 094 957
- US-A- 4 440 731

## Beschreibung

Die vorliegende Erfindung betrifft ein Absorptionsmittel und ein Verfahren zum Entfernen von Kohlendioxid aus einem Gasstrom, insbesondere aus Verbrennungsabgasen bzw. Rauchgasen.

Die Entfernung von Kohlendioxid aus Verbrennungsabgasen ist aus verschiedenen Gründen wünschenswert, insbesondere aber zur Verminderung der Emission von Kohlendioxid, die als Hauptursache für den so genannten Treibhauseffekt angesehen wird.

Im industriellen Maßstab werden zur Entfernung von Sauergasen, wie Kohlendioxid, aus Gasströmen häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Verbrennungsabgase weisen sehr geringe Kohlendioxid-Partialdrücke auf, da sie in der Regel bei einem Druck nahe dem Atmosphärendruck anfallen und typischerweise nur 3 bis 13 Vol.-% Kohlendioxid enthalten. Um eine wirksame Entfernung von Kohlendioxid zu erreichen, muss das Absorptionsmittel eine hohe CO₂-Beladbarkeit bei niedrigen Partialdrücken aufweisen. Andererseits soll die Kohlendioxid-Absorption nicht zu stark exotherm verlaufen: Da die Beladbarkeit des Absorptionsmittels mit steigender Temperatur abnimmt, ist der durch eine hohe Absorptionsreaktionsenthalpie bedingte Temperaturanstieg im Absorber nachteilig. Eine hohe Absorptionsreaktionsenthalpie bedingt außerdem einen erhöhten Energieaufwand bei der Regeneration des Absorptionsmittels. Aus verständlichen Gründen soll der Energiebedarf zur Regeneration des Absorptionsmittels (ausgedrückt z. B. als kg Dampf pro kg entferntem CO₂) möglichst niedrig sein.

Da bei der Wäsche von Verbrennungsabgasen typischerweise große Gasvolumina bei niedrigen Drücken behandelt werden, soll das Absorptionsmittel weiterhin einen niedrigen Dampfdruck aufweisen, um die Absorptionsmittelverluste gering zu halten. Das Absorptionsmittel soll außerdem keine unerwünschten Wechselwirkungen mit anderen typischen Bestandteilen der Verbrennungsabgase zeigen, wie Stickoxiden oder Sauerstoff.

Vielfach werden wässrige Lösungen von Monoethanolamin (2-Aminoethanol) zur Wäsche von Verbrennungsabgasen eingesetzt. Monoethanolamin ist billig und weist eine hohe Beladbarkeit mit Kohlendioxid auf. Allerdings sind die Absorptionsmittelverluste hoch, da Monoethanolamin einen vergleichsweise hohen Dampfdruck hat und in Gegenwart von.Sauerstoff bei erhöhten Temperaturen zur Zersetzung neigt, so dass der Make up-Bedarf 1,6 bis 2,5 kg Monoethanolamin pro Tonne entferntem Kohlendioxid beträgt. Der Energiebedarf für die Regeneration ist hoch.

Unter der Bezeichnung Alkazid M ist ein Absorptionsmittel auf der Basis von N-Methylalanin-Kaliumsalz (Kalium-α-methylaminopropionat) bekannt. Es kann wie Monoethanolamin hoch beladen werden. Das Aminosäuresalz weist aufgrund seiner ionischen Struktur einen vernachlässigbaren Dampfdruck auf. Nahteilig ist, dass der Energlebedarf für die Regeneration ähnlich hoch ist wie für Monoethanolamin.

Obgleich sekundäre und tertiäre Amine, wie Diethanolamin, Diisopropanolamin oder Methyldiethanolamin, bei niedrigen CO₂-Partialdrücken nicht so hoch beladen werden können und daher gegebenenfalls höhere Umlaufraten erforderlich sind, können diese mit geringem Energieaufwand (kg Dampf pro kg entferntem Kohlendioxid) regeneriert werden. Nachteilig ist ihre unzureichende Beständigkeit in Gegenwart von Sauerstoff.

Die EP-A 671 200 beschreibt die Entfernung von CO₂ aus Verbrennungsgasen bei Atmosphärendruck mit einer wässrigen Lösung eines Aminosäuremetallsaizes und Piperazin. Die beschriebenen Aminosäuremetallsalze sind Kalium-dimethylaminoacetat und Kalium-α-methylaminopropionat.

Die US 4,440,731 empfiehlt, einem wässrigen Absorptionsmittel, das ein Alkanolamin, wie z. B. Monoethanolamin, enthält, mehr als 50 ppm Cu²⁺-Salze sowie gegebenenfalls eine oder mehrere der unter Dihydroxyelhykglycin Alkalimetallcarbonaten, Alkalimetall- oder Ammoniumpermanganaten, Nickel- und Bismutoxiden ausgewählten Verbindungen zuzusetzen, um die Zersetzung des Absorptionsmittels zu reduzieren.

Verbrennungsgase enthalten meist Spuren von Stickoxiden bzw. nitrosen Gasen. Diese können mit sekundären Aminen wie Piperazin leicht stabile Nitrosamine bilden. Nitrosamine ist die Sammeibezeichnung für N-Nitrosoverbindungen von sekundären Aminen. Sie gehören zu den stärksten karzinogenen (krebserzeugenden) Substanzen. Die krebserzeugende Wirkung beruht auf reaktiven Metaboliten der Nitrosamine im Stoffwechsel, die mit der Erbsubstanz DNA reagieren, sie dadurch schädigen und Tumore auslösen können. Daher ist man bestrebt, den Eintrag von Nitrosaminen in die Umwelt zu verhindern, sofern technisch vermeidbar.

Der Erfindung liegt die Aufgabe zugrunde, ein Absorptionsmittel und ein Verfahren zur Entfernung von Kohlendioxid aus Gasströmen, insbesondere Verbrennungsabgasen, anzugeben, das sich auszeichnet durch (i) ein Verringertes Potential zur Bildung schädlicher Nitrosamine, (ii) hohe CO₂-Absorptionsgeschwindigkeit, (iii) hohe CO₂-Absorptionskapazität, (iv) niedrigen zur Regeneration erforderlichen Energiebedarf, (v) niedrigen Dampfdruck und (vi) Stabilität in Gegenwart von Sauerstoff.

Die Erfindung betrifft ein Absorptionsmittel, das eine wässrige Lösung
(A) 15 bis 50 Gew.-% wenigstens eines Aminosäuresalzes der Formel (I) 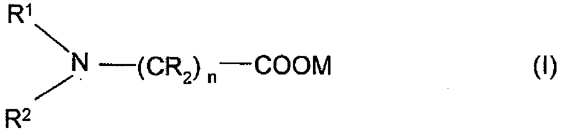
   worin R¹ und R² unabhängig voneinander für Alkyl oder Hydroxyalkyl stehen,
   R für Wasserstoff, Alkyl oder Hydroxyalkyl steht, oder ein Rest R gemeinsam mit R¹ für Alkylen steht,
   M für ein Alkalimetall steht, und
   n für eine ganze Zahl von 1 bis 6 steht, und
(B) 2 bis 20 Gew.-% wenigstens eines primären Alkanolamins umfasst,
   wobei das Absorptionsmittel von anorganischen basischen Salzen im Wesentlichen frei ist.

R¹ und R² stehen im Allgemeinen für C₁-C₆-Alkyl oder C₂-C₆-Hydroxyalkyl, vorzugsweise für Methyl oder Ethyl. R steht für Wasserstoff, Alkyl (z. B. C₁-C₆-Alkyl) oder Hydroxyalkyl (z. B. C₁-C₆-Hydroxyalkyl), n steht für eine ganze Zahl von 1 bis 6, vorzugsweise 1 oder 2. Ein Rest R kann gemeinsam mit R¹ für Alkylen (z. B. C₂-C₄-Alkylen) stehen.

Die Erfindung betrifft außerdem ein Verfahren zum Entfernen von Kohlendioxid aus einem Gasstrom, wobei man den Gasstrom mit dem oben definierten Absorptionsmittel in Kontakt bringt. In bevorzugten Ausführungsformen beträgt der Partialdruck des Kohlendioxids im Gasstrom weniger als 500 mbar, z. B. 50 bis 200 mbar. Der Gasstrom kann Sauerstoff (üblicherweise 0,5 bis 6 Vol.-%) und Spuren von Stickoxiden enthalten.

Die folgenden Ausführungen in Bezug auf das erfindungsgemäße Verfahren gelten entsprechend für das erfindungsgemäße Absorptionsmittel und umgekehrt, soweit aus dem Kontext nicht anders ersichtlich.

Die erfindungsgemäß eingesetzten Aminosäuresalze weisen eine tertiäre Aminogruppe auf. Sie zeichnen sich gegenüber Aminosäuresalzen mit primärer oder sekundärer Aminofunktion durch eine geringere Absorptionswärme aus. Die Absorptionswärme von Kalium-dimethylaminoacetat ist z. B. etwa 17 % niedriger als diejenige von Kalium-α-methylaminopropionat. Die niedrigere Absorptionswärme führt zu einem geringeren Temperaturanstieg im Absorber. Außerdem ist die Regenerationsenerie pro kg entferntem CO₂ geringer.

Geeignete Aminosäuresalze sind beispielsweise die Alkalimetallsalze von
α-Aminosäuren, wie N,N-Dimethylglycin (Dimethylaminoessigsäure), N,N-Diethylglycin (Diethylaminoessigsäure), N,N-Dimethylalanin (α-Dimethylaminopropionsäure), N,N-Dimethylleucin (2-Diemthylamino-4-methyl-pentan-1-säure), N,N-Dimethylisoleucin (α-Dimethylamino-β-methylvaleriansäure), N,N-Dimethylvalin (2-Dimethylamino-3-methyl-butansäure), N-Methylprolin (N-Methyl-pyrrolidin-2-carbonsäure), N,N-Dimethylserin (2-Dimethylamino-3-hydroxy-propan-1-säure),
β-Aminosäuren, wie 3-Dimethylaminopropionsäure, N-Methyliminodipropionsäure, N-Methyl-piperidin-3-carbonsäure,
oder Aminocarbonsäuren wie N-Methyl-piperidin-4-carbonsäure, 4-Dimethylaminobuttersäure.

Wenn die Aminosäure ein oder mehrere chirale Kohlenstoffatome aufweist, ist die Konfiguration unbeachtlich; es können sowohl die reinen Enantiomere/Diastereomere als auch beliebige Gemische oder Racemate verwendet werden.

Das Alkalimetallsalz ist vorzugsweise ein Natrium- oder Kaliumsalz, wovon Kaliumsalze am meisten bevorzugt sind.

Besonders bevorzugte Aminosäuresalze (A) sind
N,N-Dimethylaminoessigsäure-Kaliumsalz,
N,N-Diethylaminoessigsäure-Kaliumsalz, und
N-Ethyl-N-methylaminoessigsäure-Kaliumsalz.

Als Komponente (B) enthält das erfindungsgemäße Absorptionsmittel ein primäres Alkanolamin. Das primäre Alkanolamin wirkt als Aktivator und beschleunigt die CO₂-Aufnahme des Absorptionsmittels durch intermediäre Carbamatbildung. Im Gegensatz zu sekundären Aminen bildet das primäre Alkanolamin mit Stickoxiden, wie sie im zu behandelnden Gasstrom vorkommen können, keine unerwünschten Nitrosamine.

Das Alkanolamin (B) weist wenigstens eine primäre Aminogruppe und wenigstens eine Hydroxyalkylgruppe auf. Es enthält typischerweise 2 bis 12 Kohlenstoffatome, vorzugsweise 2 bis 6 Kohlenstoffatome. Es kann ein oder mehrere Sauerstoffatome in Etherbindung enthalten.

Das Alkanolamin (B) ist vorzugsweise ausgewählt unter
2-Aminoethanol,
3-Aminopropanol,
4-Aminobutanol,
2-Aminobutanol,
5-Aminopentanol,
2-Aminopentanol,
2-(2-Aminoethoxy)ethanol.

Davon sind 4-Aminobutanol, 2-Aminobutanol, 5-Aminopentanol und 2-Aminopentanol aufgrund ihres niedrigen Dampfdrucks besonders bevorzugt.

Vorzugsweise enthält das Absorptionsmittel
20 bis 40 Gew.-%, insbesondere 30 bis 40 Gew.-%, Aminosäuresalz (A) und
5 bis 15 Gew.-%, insbesondere 5 bis 10 Gew.-%, Alkanolamin (B).

Das Absorptionsmittel kann auch Additive, wie Korrosionsinhibitoren, Enzyme etc. enthalten. Im Allgemeinen liegt die Menge an derartigen Additiven im Bereich von etwa 0,01 bis 3 Gew.-% des Absorptionsmittels.

Das Absorptionsmittel ist von anorganischen basischen Salzen im Wesentlichen frei, d. h. es enthält im Allgemeinen weniger als etwa 10 Gew.-%, vorzugsweise weniger als etwa 5 Gew.-% und insbesondere weniger als etwa 2 Gew.-%, anorganische basische Salze. Anorganische basische Salze sind beispielsweise Alkalimetall- oder Erdalkalimetallcarbonate oder -hydrogencarbonate, wie insbesondere Kaliumcarbonat (Pottasche). Selbstverständlich kann man das Metallsalz der Aminocarbonsäure durch in situ-Neutralisation einer Aminocarbonsäure mit einer anorganischen Base wie Kaliumhydroxid erhalten; jedoch verwendet man hierzu keine wesentlich über die zur Neutralisation erforderliche Menge hinausgehenden Menge Base.

Bei dem Gasstrom handelt es sich im Allgemeinen um einen Gasstrom, der auf folgende Weise gebildet wird:
a) Oxidation organischer Substanzen z. B. Verbrennungsabgase bzw. Rauchgase (flue gas),
b) Kompostierung und Lagerung organische Substanzen enthaltender Abfallstoffe, oder
c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organischen Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Im Allgemeinen enthalten diese Gasströme bei Normalbedingungen weniger als 50 mg/m³ Schwefeldioxid.

Die Ausgangsgase können entweder den Druck aufweisen, der etwa dem Druck der Umgebungsluft entspricht, also z. B. Normaldruck oder einen Druck, der vom Normaldruck um bis zu 1 bar davon abweicht.

Zur Durchführung des erfindungsgemäßen Verfahrens geeignete Vorrichtungen umfassen wenigstens eine Waschkolonne, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Geeignet zur Durchführung des erfindungsgemäßen Verfahrens sind auch Waschkolonnen aus Kunststoff, wie Polyolefinen oder Polytetrafluorethylen, oder Waschkolonnen, deren innere Oberfläche ganz oder teilweise mit Kunststoff oder Gummi ausgekleidet ist. Weiterhin eignen sich Membrankontaktoren mit Kunststoffgehäuse.

Die Temperatur des Absorptionsmittels beträgt im Absorptionsschritt im Allgemeinen etwa 25 bis 70 °C, bei Verwendung einer Kolonne beispielsweise 25 bis 60 °C, vorzugsweise 30 bis 50 °C und besonders bevorzugt 35 bis 45 °C, am Kopf der Kolonne und z. B. 40 bis 70 °C am Boden der Kolonne. Es wird ein an Kohlendioxid und anderen sauren Gasbestandteilen armes, d. h. ein an diesen Bestandteilen abgereichertes Produktgas und ein mit sauren Gasbestandteilen beladenes Absorptionsmittel erhalten.

Aus dem mit den sauren Gasbestandteilen beladenen Absorptionsmittel kann das Kohlendioxid in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen regeneriert man das beladene Absorptionsmittel durch
a) Erwärmung, z. B. auf 70 bis 110 °C,
b) Entspannung,
c) Strippen mit einem inerten Fluid
oder eine Kombination zweier oder aller dieser Maßnahmen.

In der Regel wird das beladene Absorptionsmittel zur Regeneration erwärmt und das freigesetzte Kohlendioxid wird z. B. in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen. Der erhaltene gas-flüssig-gemischtphasige Strom wird in ein Phasentrenngefäß geleitet, aus dem das Kohlendioxid abgezogen wird; die Flüssigphase wird zur vollständigen Regeneration des Absorptionsmittels in die Desorptionskolonne geleitet.

Vielfach wird das in der Desorptionskolonne freigesetzte Kohlendioxid anschließend verdichtet und z. B. einem Drucktank oder einer Sequestrierung zugeführt. In diesen Fällen kann es vorteilhaft sein, die Regeneration des Absorptionsmittels bei einem höheren Druck, z. B. 2 bis 10 bar, vorzugsweise 2,5 bis 5 bar durchzuführen. Das beladene Absorptionsmittel wird hierzu mittels einer Pumpe auf den Regenerationsdruck verdichtet und in die Desorptionskolonne eingebracht. Das Kohlendioxid fällt auf diese Weise auf einem höheren Druckniveau an. Die Druckdifferenz zum Druckniveau des Drucktanks ist geringer und man kann unter Umständen eine Kompressionsstufe einsparen. Ein höherer Druck bei der Regeneration bedingt eine höhere Regenerationstemperatur. Bei höherer Regenerationstemperatur kann eine geringere Restbeladung des Absorptionsmittels erreicht werden. Die Regenerationstemperatur ist in der Regel nur durch die thermische Stabilität des Absorptionsmittels begrenzt.

Vor der erfindungsgemäßen Absorptionsmittel-Behandlung wird das Verbrennungsabgas vorzugsweise einer Wäsche mit einer wässrigen Flüssigkeit, insbesondere mit Wasser, unterzogen, um das Rauchgas abzukühlen und zu befeuchten (quenchen).

Bei der Wäsche können auch Stäube oder gasförmige Verunreinigungen wie Schwefeldioxid entfernt werden.

## Patentansprüche

1. Absorptionsmittel, umfassend eine wässrige Lösung von
(A) 15 bis 50 Gew.-% wenigstens eines Aminosäuresalzes der Formel (I) 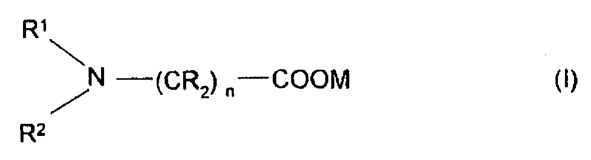
worin R¹ und R² unabhängig voneinander für Alkyl oder Hydroxyalkyl stehen,
R für Wasserstoff, Alkyl oder Hydroxyalkyl steht, oder ein Rest R gemeinsam mit R¹ für Alkylen steht,
M für ein Alkalimetall steht, und
n für eine ganze Zahl von 1 bis 6 steht, und
(B) 2 bis 20 Gew.-% wenigstens eines primären Alkanolamins,
wobei das Absorptionsmittel von anorganischen basischen Salzen im Wesentlichen frei ist.

2. Absorptionsmittel nach Anspruch 1, wobei das Absorptionsmittel 20 bis 40 Gew.-% Aminosäuresalz (A) und 5 bis 15 Gew.-% Alkanolamin (B) enthält.

3. Absorptionsmittel nach einem der vorhergehenden Ansprüche, wobei M für Kalium steht.

4. Absorptionsmittel nach einem der vorhergehenden Ansprüche, wobei n für 1 oder 2 steht.

5. Absorptionsmittel nach einem der vorhergehenden Ansprüche, wobei das Aminosäuresalz (A) ausgewählt ist unter
N,N-Dimethylaminoessigsäure-Kaliumsalz,
N,N-Diethyfaminoessigsäure-Kaliumsalz, und
N-Ethyl-N-methylaminoessigsäure-Kaliumsalz.

6. Absorptionsmittel nach einem der vorhergehenden Ansprüche, wobei das Alkanolamin (B) ausgewählt ist unter
2-Aminoethanol,
3-Aminopropanol,
4-Aminobutanol,
2-Aminobutanol,
5-Aminopentanol,
2-Aminopentanol.
2-(2-Aminoethoxy)ethanol.

7. Verfahren zum Entfernen von Kohlendioxid aus einem Gasstrom, wobei man den Gasstrom mit einem Absorptionsmittel nach einem der vorhergehenden Ansprüche in Kontakt bringt.

8. Verfahren nach Anspruch 7, wobei der Partialdruck des Kohlendioxids im Gasstrom weniger als 500 mbar beträgt.

9. Verfahren nach Anspruch 7 oder 8, wobei der Gasstrom Sauerstoff und gegebenenfalls Spuren von Stickoxiden enthält.

10. Verfahren nach Anspruch 7, 8 oder 9, wobei man das beladene Absorptionsmittel durch
a) Erwärmung,
b) Entspannung,
c) Strippen mit einem inerten Fluid
oder eine Kombination zweier oder aller dieser Maßnahmen regeneriert.

## Claims

1. An absorption medium which comprises an aqueous solution of
(A) 15 to 50% by weight of at least one amino acid salt of the formula (I) 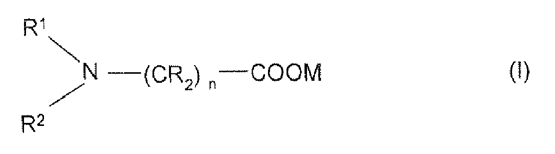
where R¹ and R² independently of one another are alkyl or hydroxyalkyl,
Ris hydrogen, alkyl or hydroxyalkyl, or one radical R together with R¹ is alkylene,
Mis an alkali metal and
nis an integer from 1 to 6, and
(B) 2 to 20% by weight of at least one primary alkanolamine,
the absorption medium being essentially free from inorganic basic salts.

2. The absorption medium according to claim 1, wherein the absorption medium comprises 20 to 40% by weight amino acid salt (A) and 5 to 15% by weight alkanolamine (B).

3. The absorption medium according to one of the preceding claims, where M is potassium.

4. The absorption medium according to one of the preceding claims, wherein n is 1 or 2.

5. The absorption medium according to one of the preceding claims, wherein the amino acid salt (A) is selected from
N,N-dimethylaminoacetic acid potassium salt,
N,N-diethylaminoacetic acid potassium salt, and
N-ethyl-N-methylaminoacetic acid potassium salt.

6. The absorption medium according to one of the preceding claims, wherein the alkanolamine (B) is selected from
2-aminoethanol,
3-aminopropanol,
4-aminobutanol,
2-aminobutanol,
5-aminopentanol,
2-aminopentanol,
2-(2-aminoethoxy)ethanol.

7. A process for removing carbon dioxide from a gas stream, which comprises bringing the gas stream into contact with an absorption medium according to one of the preceding claims.

8. The process according to claim 7, wherein the partial pressure of the carbon dioxide in the gas stream is less than 500 mbar.

9. The process according to claim 7 or 8, wherein the gas stream comprises oxygen and possibly traces of nitrogen oxides.

10. The process according to claim 7, 8 or 9, wherein the loaded absorption medium is regenerated by
a) heating,
b) expansion,
c) stripping with an inert fluid
or a combination of two or all of these measures.

## Revendications

1. Agent d'absorption, comprenant une solution aqueuse de
(A) 15 à 50 % en poids d'au moins un sel d'acide aminé de formule (I) 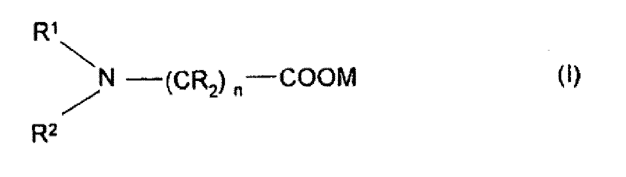
dans laquelle R¹ et R² représentent indépendamment l'un de l'autre alkyle ou hydroxyalkyle, R représente hydrogène, alkyle ou hydroxyalkyle, ou un radical R représente conjointement avec R¹ un alkylène,
M représente un métal alcalin et
n représente un nombre entier de 1 à 6, et
(B) 2 à 20 % en poids d'au moins une alcanolamine primaire,
l'agent d'absorption étant essentiellement exempt de sels basiques inorganiques.

2. Agent d'absorption selon la revendication 1, dans lequel l'agent d'absorption contient 20 à 40 % en poids du sel d'acide aminé (A) et 5 à 15 % en poids de l'alcanolamine (B).

3. Agent d'absorption selon l'une quelconque des revendications précédentes, dans lequel M représente le potassium.

4. Agent d'absorption selon l'une quelconque des revendications précédentes, dans lequel n représente 1 ou 2.

5. Agent d'absorption selon l'une quelconque des revendications précédentes, dans lequel le sel d'acide aminé (A) est choisi parmi :
le sel de potassium de l'acide N,N-diméthylaminoacétique,
le sel de potassium de l'acide N,N-diéthylaminoacétique et
le sel de potassium de l'acide N-éthyl-N-méthylaminoacétique.

6. Agent d'absorption selon l'une quelconque des revendications précédentes, dans lequel l'alcanolamine (B) est choisie parmi :
le 2-aminoéthanol,
le 3-aminopropanol,
le 4-aminobutanol,
le 2-aminobutanol,
le 5-aminopentanol,
le 2-aminopentanol,
le 2-(2-aminoéthoxy)éthanol.

7. Procédé d'élimination de dioxyde de carbone d'un courant gazeux, dans lequel le courant gazeux est mis en contact avec un agent d'absorption selon l'une quelconque des revendications précédentes.

8. Procédé selon la revendication 7, dans lequel la pression partielle du dioxyde de carbone dans le courant gazeux est inférieure à 500 mbar.

9. Procédé selon la revendication 7 ou 8, dans lequel le courant gazeux contient de l'oxygène et éventuellement des traces d'oxydes d'azote.

10. Procédé selon la revendication 7, 8 ou 9, dans lequel l'agent d'absorption chargé est régénéré par
a) chauffage,
b) détente,
c) extraction avec un fluide inerte,
ou une combinaison de deux ou de l'ensemble de ces mesures.
